Europäisches Patentamt

(19) **European Patent Office**

**Office européen des brevets**

(11) Publication number: **0 234 614**
**A1**

(12) # EUROPEAN PATENT APPLICATION

(21) Application number: **87200092.2**

(22) Date of filing: **22.01.87**

(51) Int. Cl.³: **H 02 P 8/00**

(30) Priority: **23.01.86 NL 8600150**

(43) Date of publication of application:
**02.09.87 Bulletin 87/36**

(84) Designated Contracting States:
**AT BE CH DE ES FR GB IT LI LU NL SE**

(71) Applicant: **Staat der Nederlanden (Staatsbedrijf der Posterijen, Telegrafie en Telefonie)**
**P.O. Box 430**
**NL-2260 AK Leidschendam(NL)**

(72) Inventor: **Kegel, Jacobus Adrianus**
**53 Boslaan**
**NL-2761 VW Zevenhuizen(NL)**

(72) Inventor: **Trommel, Eric Simon**
**29 Lammerweide**
**NL-2727 ET Zoetermeer(NL)**

(54) **Device for controlling a circuit through an impedance.**

(57) Device for quickly and accurately controlling a current through a load impedance, for example a coil of a micro-stepping stepping motor, in which a comparator compares a reference signal with a current measuring signal and, dependent on the sign of the difference, makes the load impedance connect either to the one or to the other of two voltage sources, which are differently polarized with respect to each other, by means of a switching device. In order to avoid too quick a switching the comparator is controlled by an impulse sender, the comparator being able to change its output signal only during and/or a short time after a pulse has been received from the impulse sender.

FIG.3

Device for controlling a current through an impedance.

A. Background of the invention

   1. Field of the invention

The invention relates to a device for controlling a current through a substantially reactive load impedance, which is connected to a current or voltage source via a current measuring device and a switching device, which is controlled by the output terminal of a comparator, a first input terminal of which is connected to the current measuring device and a second input terminal of which is connected to a reference signal source, the switching device establishing or breaking the connection between the load impedance and the first current or voltage source pursuant to a signal delivered by the comparator.

   2. State of the art

A device of the above-mentioned type is known from e.g. the French patent application 2539259, which device is used for controlling the current through the coils of a stepping motor. Each of the coils is connected in series to a transistor functioning as a switching device and to a series resistor.

This series connection is connected to a voltage source. A diode is connected in parallel to the coil. The current through the coil is controlled by means of a comparator, one input terminal of which is connected to a reference voltage source, and the second input terminal of which is connected to the point located between said series resistor and the coil and the voltage at which corresponds with the current through the coil. In the comparator the voltage measured, which corresponds with the current through the coil, is thus compared with the reference voltage. If the voltage measured is lower than the reference voltage, the transistor will be brought into the conducting state. If the voltage measured is higher, the transistor will be brought into the non-conducting state. The (decreasing) current in the coil flows via a diode which is connected in an antiparallel manner. The voltage across the series resistor gradually decreases due to the discharging, via this resistor, of a capacitor interposed between the output terminal of the comparator and the resistor. As soon as this capacitor has discharged itself to such an extent that the voltage across the series resistor is lower than said reference voltage, the transistor will be brought into the conducting state from the comparator. As a matter of fact the transistor is controlled via a gate circuit with two input terminals, one of which is controlled by the output terminal of the comparator and the other one by a control device controlling the time and sequence of energizing the various motor coils. The transistor is directly controlled by the output terminal of the gate.

A drawback of the known device is that is is not suited to be utilized when the reference voltage frequently changes as it is the case with stepping motors for high speeds and micro-stepping. Changes in the reference voltage have then to be followed quickly as well as accurately by corresponding changes in the current through the coil. Notably the known device does not offer the possibility of permitting the current through the coil to fall very quickly or even to change its direction, which is required for micro-stepping.

## B. Summary of the invention

The device according to the present invention provides the possibility to remove said difficulty by controlling the current through the coil by means of frequently changing the polarity of the voltage applied, unwanted oscillations of the control being preferably prevented by the pulsated working of the comparator.

The invention provides a device of the type mentioned under A.1 and is characterized in that the load impedance is, moreover, connected, via the current measuring device and the switching device, to a second current or voltage source having a polarity which is reverse with regard to the first current or voltage source, the switching device alternately connecting the load impedance to the first or to the second current or voltage source under the control of the comparator. For example in a device of this type, in which the comparator makes the switching device connect the load impedance to the first current or voltage source if the signal delivered by the current measuring device is smaller than the reference signal, and in which the comparator makes the switching device disconnect the load impedance from the first current or voltage source if the former signal is larger than the reference signal, the second current or voltage source will be connected to the load impedance by the switching device, if the signal delivered by the measuring device is larger than the reference signal and it will be disconnected from the load impedance if the former signal is smaller than the reference signal. Owing to this measure it is achieved that changes in the desired current, to be controlled by a change of the reference signal, can be followed quickly and accurately, because of the fact that the fall of the current through the coil, after it had exceeded the desired values, will be considerably expedited by applying an inverted voltage source, or as the case may be, current source, as a result of which the coil will be "sucked empty" as it were. This is particularly of importance when the desired current value considerably falls within a short time or even gets an opposite sign. The device according to the invention also allows the desired current to change not only its intensity, but also its sign.

. In order to prevent that the control will start switching in an undesirably quick way in a switching frequency determined by the control circuit, the device according to the invention is preferably provided with an impulse sender, and the comparator can change its control signal only during and/or a short time after a control impulse has been received from the impulse sender. As a preferred embodiment of the invention the switching device consists of a pair of coupled transistors, for example M.O.S.F.E.T.s, the bases of which are controlled via a logical circuit, in such a way that, dependent on the output signal of the comparator, either the one or the other transistor will be brought into the conducting state, with due observance of a certain delay. It is further remarked that the current measuring device is preferably a series resistor, the impulse sender an oscillator and the load impedance a coil of a stepping motor suited for micro-stepping.

## C. Short description of the figures

| | |
|---|---|
| Figure 1 | shows a basic diagram of the device according to the invention; |
| Figure 2 | shows an associated diagram; |
| Figure 3 | shows an embodiment of the invention; |
| Figures 4A – 4C | show the principle of micro-stepping; |
| Figure 5 | shows a complete embodiment of a control device for a stepping motor with micro-stepping facility, comprising two co-operating devices according to the embodiment of the invention shown in figure 3. |

## D. Description of the figures and of the embodiments

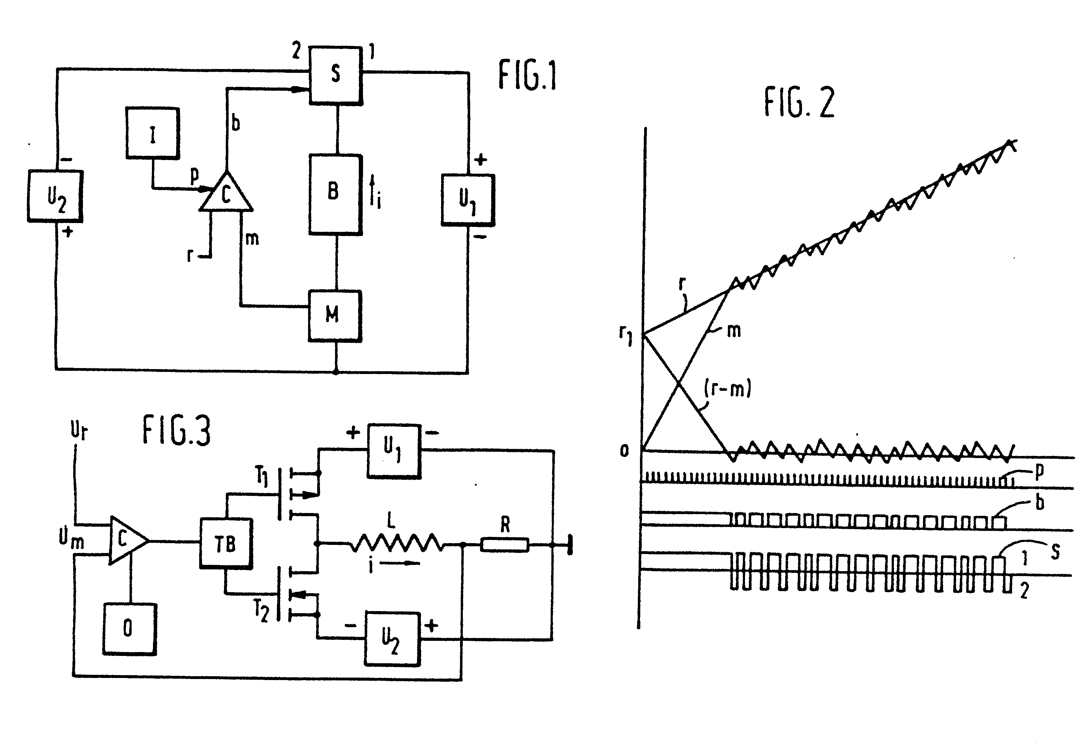

Figure 1 shows a load impedance B, connected via a switching device S either to a voltage source $U_1$ or to a voltage source $U_2$, which voltage sources have a reverse polarity with respect to each other, but apart from that they can have an equal terminal

- 5 -

0234614

voltage. The circuit comprises a current measuring device M connected in series to the load impedance B. A test signal m corresponding to a current i, which flows through the load impedance B and the measuring device M, is applied to an input terminal of a comparator C, to another input terminal of which a reference signal r is applied. The output terminal of the comparator C controls the switching device S in such a way that if the test signal m is smaller than the reference signal r, the load impedance B will be connected to the voltage source $U_1$ (position 1 of the switching device S) and to the voltage source $U_2$ (position 2 of the switching device S), if the test signal m is larger than the reference signal r. Because of the fact that the load impedance B is connected to an oppositely polarized voltage source $U_2$ (position 2 of the switching device S), after the test signal m has exceeded the value of the reference signal r, the current i will fall very quickly (and consequently the test signal m). If after this the test signal m becomes smaller than the reference signal r, the load impedance B will be connected to the first voltage source $U_1$ again, due to which the current i will rise.

In order to prevent the control circuit from switching undesirably quickly, the comparator C has been connected to an impulse sender I. The impulse sender I transmits control pulses p to the comparator C. The comparator C can only change its output signal b (1 into 0 or 0 into 1) during the reception of such a pulse p. If at that moment $m < r$, the switching device S will be (or remains) switched into (in) its position 1; if at that moment $m > r$, the switching device S will be (or remains) switched into (in) its position 2.

Figure 2 shows the course of the test signal m (and, consequently, of the current i) in the time at an increasing value of the reference signal r. The figure also shows the course of the difference between the reference signal and the test signal (r-m) and, moreover, it represents the periodic pulse signal p supplied to the comparator C and the resulting output signal of the comparator C, being the control signal b for the switching device S, as well as the consequent consecutive positions 1 respectively 2 of the switching device S.

Starting from the condition that $m=0$ and $r=r1$ the comparator C will get a 1 as output signal, as a result of which the switching device S will take up position 1 and as a consequence $U_1$ will be connected to the impedance B. Owing to this a current i will start flowing through impedance B, as a result of which m will become $> 0$. On the consecutive reception of the pulses p the comparator C will not change said condition as long as $m < r$ $(r-m > 0)$. On the reception of the first pulse p, after m has become $> r$ $(r-m < 0)$, the comparator C will make a 0 appear at its output terminal and this control signal $b=0$ will make the switching device S change over to its position 2, due to which the load impedance B will be connected to the voltage source $U_2$, which is reversely polarized with respect to $U_1$. In consequence of this the current i and consequently the test signal m will fall within a short time. On reception of the first pulse p, after m has become smaller than r, the comparator C will change the control signal into a 1 again, in consequence of which the switching device S will take up its position 1 once again. Figure 2 shows that when the reference signal r rises, the average time during which the switching device S is in its position 1 will be longer than the time during which it is in its position 2. It will be understandable that when r falls, the switching device S will be in its position 2 for the longest time on an average.

By means of the circuit of figure 1 a current i through the load impedance B is obtained in the way described above, which current can quickly and accurately follow any variation in the reference signal r, irrespective as to whether this signal r is rising or falling, positive or negative. The speed at which the variations can be followed and the accuracy are of course dependent on the various parameters, such as the reactance of the load impedance B, the value of $U_1$ respectively $U_2$ and the pulse frequency of the impulse sender I, and also on the speed at which and the accuracy with which the various devices, in this case the comparator C and the switching device S, function. It is remarked that where in figure 2 the rising and falling of m respectively (r-m) have been represented as being linear, it will be clear that in reality they will take place logarithmically.

In figure 3 the load impedance B is a coil L, of e.g. a stepping motor, the current measuring device a resistor R, the switching device a combination of two field-effect transistors $T_1$ and $T_2$ and the impulse sender an oscillator O. The transistors $T_1$ and $T_2$ are controlled by the output terminal of a comparator C via a transistor control TB. Each of the transistors $T_1$ and $T_2$ is connected to a voltage source $U_1$ respectively $U_2$, which are differently polarized with respect to each other, but have an equal terminal voltage. The terminal voltage of $U_1$ and $U_2$ is relatively high in order to obtain a quick rise respectively fall of the current i through the coil round about the desired instantaneous value, so that also quick fluctuations in the desired value can be followed accurately. The working fully corresponds with the working described in coherence with the figures 1 and 2. The test signal, corresponding to the current i, is in this case the measuring voltage $U_m$ across the resistor R. The comparator C only changes its output signal if the signal received from the oscillator has a positive instantaneous value and the sign of the value $(U_r-U_m)$ has, moreover, changed in the meantime.

The output terminal of the comparator is connected to the transistor control TB, which converts a binary signal into a control current to the one or to the other transistor $T_1$ respectively $T_2$. Besides the transistor control is provided with a small delay circuit, which prevents that the one transistor will already be brought into the conductive state before the other one has completely come into the non-conductive state.

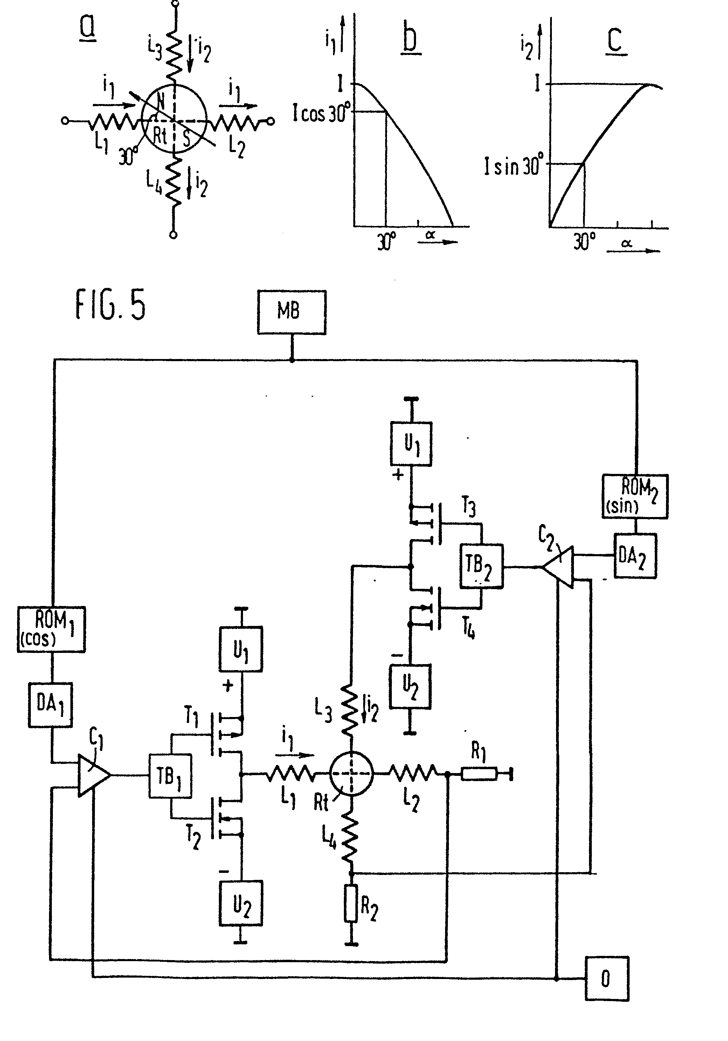

Figure 4a shows a diagram of a stepping motor, comprising a rotor Rt and four coils $L_1$-$L_4$, which are connected in series in pairs. The rotor Rt is permanently magnetized. If a current flows only through $L_1$-$L_2$, the rotor Rt will take up a position in the direction of the magnetic field excited by $L_1$ and $L_2$ (horizontal in the figure); likewise if a current flows only through $L_3$-$L_4$, the rotor will take up a position in the direction of the magnetic field of $L_3$ and $L_4$ (vertical). If, however, a current flows not only through $L_1$-$L_2$, but also through $L_3$-$L_4$, the rotor Rt will take up a position which depends on the ratio between and the direction of the respective currents $i_1$ and $i_2$. In this way the posistition of the rotor Rt can be changed by changing said ratio and/or direction.

The currents $i_1$ and $i_2$ preferably have the value I cos $\alpha$ respectively I sin $\alpha$, in which $\alpha$ is the desired angle of the rotor with respect to the axis of the coil $L_1$-$L_2$ and I is the value of the current $i_1$ respectively $i_2$ when $\alpha = 0^o$ respectively $\alpha = 90^o$. Since the resultant $i_r$ of $i_1$ and $i_2 = \sqrt{(i_1^2 + i_2^2)}$, in which $i_1 = $ I cos $\alpha$ and $i_2 = $ I sin $\alpha$, is

$$i_r = I \sqrt{(\cos^2\alpha + \sin^2\alpha)} = I;$$

so for all the vaues of $\alpha$ $i_r$ is constant and, consequently, also the driving couple of the rotor Rt is constant. Figures 4b and 4c show the desired currents $i_1$ respectively $i_2$ as a function of the angle $\alpha$ (drawn for $\alpha = 0....90^o$).

Figure 5 finally shows a detailed diagram of a control device for a stepping motor with the possibility of micro-stepping, provided with two co-operating current control devices according to the embodiment of the invention described above and shown in figure 3.

From a motor control device MB, in which the desired number of complete revolutions and the desired final position of the rotor are put in, a number of signal cycles are delivered to two ROMs, $ROM_1$ and $ROM_2$, which each will deliver a digital output signal on the reception of an input signal, which output signal corresponds to the cosine respectively the sine of that input signal. For each desired revolution the ROMs receive a number of signal cycles, dependent on the number of pairs of poles of the relevant stepping motor and the type of stepping motor (in this case a stepping motor with permanent magnets or with variable reluctance or a hybrid stepping motor). ultimate position of the rotor Rt is determined by the values stated by the ROMs as the final state. The digital signals delivered by the respective ROMs are converted by the respective digital-to-analog converters $DA_1$ and $DA_2$, into reference voltages applied to an input terminal of the comparators $C_1$ respectively $C_2$. It is remarked that a motor control device as described above is already known in itself from the Japanese patent publications 59-204497, 59-204498 and 59-204499. The currents $i_1$ and $i_2$ through the pairs of coils $L_1-L_2$ and $L_3-L_4$, respectively are controlled in the way described before by means of the transistors $T_1$, $T_2$ and $T_3$, $T_4$, connected to the voltage sources $U_1$ and $U_2$, respectively, which transistors are controlled by the comparators $C_1$ and $C_2$, respectively via the transistor controls $TB_1$ and $TB_2$, respectively, the change of the output signals of the comparators $C_1$ and $C_2$, respectively being controlled by a common oscillator O. The measuring voltages for $C_1$ and $C_2$ are taken off from the measuring resistors $R_1$ and $R_2$, respectively.

Any position of the rotor Rt wanted by the motor control device MB is converted by the ROMs and DA-converters into a corresponding cosine or sine value, respectively, which is applied as a reference voltage to the relevant input terminal of the comparators $C_1$ and $C_2$. Controlled by the oscillator O the comparators $C_1$ and $C_2$ control via $TB_1$ and $TB_2$, respectively the transistors $T_1$, $T_2$ and $T_3$, $T_4$, respectively in such a way that the coils $L_1-L_2$ and $L_3-L_4$, respectively are connected to that voltage source $U_1$ or $U_2$, respectively which quickly changes the current $i_1$ or $i_2$, respectively in the sense desired. Coupling back takes place by applying the voltage across the

measuring resistors $R_1$ and $R_2$ to the second input terminal of the comparator $C_1$ or $C_2$, respectively.

E. References

French patent application 2539259 in the name of Regie Nationale des Usines Renault, published July 13, 1984. Japanese patent publications 59-204497, 59-204498 and 59-204499 in the name of Matsushita Electr. Works, published November 19, 1984.

F. <u>Claims</u>

1. Device for controlling a current through a substantially reactive load impedance, which is connected to a current or voltage source via a current measuring device and a switching device, which is controlled by the output terminal of a comparator, a first input terminal of which is connected to the current measuring device and a second input terminal of which is connected to a reference signal source, the switching device establishing or breaking the connection between the load impedance and the first current or voltage source pursuant to a signal delivered by the comparator, characterized in that the load impedance (B) is, moreover, connected, via the current measuring device (M) and the switching device (S), to a second current or voltage source $(U_2)$ having a polarity which is reverse with regard to the first current or voltage source $(U_1)$, the switching device (S) alternately connecting the load impedance (B) to the first or to the second current or voltage source under the control of the comparator (C).

2. Device in accordance with claim 1, in which the comparator makes the switching device connect the load impedance to the first current or voltage source, if the signal delivered by the current measuring device is smaller than the reference signal, and in which the comparator makes the switching device disconnect the load impedance from the first current or voltage source, if the former signal is larger than the reference signal, characterized in that the second current or voltage source $(U_2)$ will be connected to the load impedance (B) by the switching device (S), if the signal (m) delivered by the measuring device (M) is larger than the reference signal (r) and it will be disconnected from the load impedance, if the former signal is smaller than the reference signal.

3. Device in accordance with claim 1 or 2, characterized in that the comparator (C) is controlled by an impulse sender (I), the comparator being able to change its control signal (b) to the switching device (S) only during and/or a short time after a control impulse (p) has been received from the impulse sender.

4. Device in accordance with claim 3, characterized in that the impulse sender (I) is an oscillator (O).

5. Device in accordance with claim 1 or 2, characterized in that the switching device consists of a pair of collector respectively drain coupled or emitter respectively source coupled transistors respectively FETs ($T_1$, $T_2$), the respective bases respectively gates of which are controlled from the comparator (C), and in that the current measuring device is a series resistor (R).

6. Device in accordance with claim 5, characterized in that the respective bases or gates of said transistors ($T_1$, $T_2$) are controlled from the comparator (C) via a logical circuit (TB), which ensures that, dependent on the output signal of the comparator, either the one transistor ($T_1$) or the other one ($T_2$) will be brought into the conducting state, and which, moreover, provides a delay circuit, due to which the one transistor will not be brought into the conducting state until a short time after the other one has been brought into the non-conducting state.

7. Device in accordance with one of the preceding claims, in which the load impedance is a coil (L) of a stepping motor.

8. Control device for a stepping motor, provided with a device in accordance with one of the preceding claims.

FIG.1

FIG. 2

FIG.3

FIG. 4

0234614

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | FR-A-2 539 259 (RENAULT) <br> * Figure 1; abstract * | 1,8 | H 02 P 8/00 |
| A | DE-A-2 361 003 (LICENTIA PATENT-VERWALTUNGS-GmbH) <br> * Figure 3 * | 1,8 | |
| A | FEINWERKTECHNIK + MESSTECHNIK, vol. 82, no. 5, 1974, pages 219-222, DE; R. WEINBECK: "Ansteuerprinzipien für Schrittmotoren und Einsatzbeispiele in der Datenverarbeitung" <br> * Paragraph 1.2 * | 1,8 | |

**TECHNICAL FIELDS SEARCHED (Int. Cl.4)**

H 02 P 8/00
G 05 F
H 03 K

The present search report has been drawn up for all claims

| Place of search | Date of completion of the search | Examiner |
|---|---|---|
| THE HAGUE | 08-05-1987 | BEYER F. |